(19)

Europäisches
Patentamt

European
Patent Office

Office européen
des brevets

(11) **EP 3 144 059 A1**

(12) **EUROPEAN PATENT APPLICATION**

(43) Date of publication:
**22.03.2017 Bulletin 2017/12**

(51) Int Cl.:
**B01J 13/14** *(2006.01)*

(21) Application number: **15306429.0**

(22) Date of filing: **16.09.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Total Marketing Services
92800 Puteaux (FR)**

(72) Inventors:
• **LANCON, Denis
  69680 Chassieu (FR)**

• **VERNAY, Richard
  69850 Saint Martin en Haut (FR)**
• **BIBETTE, Jérôme
  75005 Paris (FR)**
• **DEMOULIN, Damien
  75019 Paris (FR)**
• **WALTERS, Jamie
  75005 Paris (FR)**

(74) Representative: **Lavoix
2, place d'Estienne d'Orves
75441 Paris Cedex 09 (FR)**

(54) **METHOD FOR PREPARING MICROCAPSULES BY DOUBLE EMULSION**

(57)     The present invention relates to a method for preparing solid microcapsules, comprising the steps of:
a) adding under agitation a composition C1 comprising at least one active material to a cross-linkable liquid composition C2,
wherein the active material is an additive to be used in the oil industry, composition C1 and composition C2 being immiscible with each other,
so that a first emulsion is obtained, said first emulsion comprising droplets of composition C1 dispersed in composition C2,
b) adding under agitation the first emulsion obtained in step a) to a liquid composition C3,
composition C3 and composition C2 being immiscible with each other,
so that a second emulsion is obtained, said second emulsion comprising droplets dispersed in composition C3,
c) loading the second emulsion obtained in step b) in a mixer which applies a homogeneous controlled shear rate to said second emulsion, said shear rate being from 1 000 s$^{-1}$ to 100 000 s$^{-1}$,
so that a third emulsion is obtained, said third emulsion comprising droplets dispersed in composition C3, and
d) cross-linking the droplets obtained in step c),
so that solid microcapsules dispersed in composition C3 are obtained.

EP 3 144 059 A1

**Description**

The present invention relates to a method for producing solid microcapsules using a method and to the microcapsules obtained by said method.

The problem of isolating an active material from the surrounding environment in order to improve an active material performance is a relatively new area for a number of industries. In most non-bio industries, the losses in performance associated with factors such as hydrolysis, thermal degradation, oxidation and cross-reactivity is addressed by increasing the concentration of the active material to achieve the desired level of performance, which increases the cost, and also introduces further problems associated with the product formed from such unwanted reactions.

However, in a number of industries including fuel and lubricant industries, it is required to isolate an active material from the surrounding environment, in order to protect the material from hydrolysis, thermal degradation, oxidation, cross-reactivity and other methods which can reduce the performance of the material.

Thus, it is sometimes advantageous to encapsulate an active material in microcapsules.

In addition, many applications require that the thereby produced microcapsules have a small size and/or a narrow size range (i.e. good size monodispersity), in order to have greater control over their overall performance, to improve their dispersion, and to bypass filters used in the systems being applied to, for example particulate filters used in engines and gearboxes.

In recent years, a large number of encapsulation methods have been developed and reported in the literature, including spray-drying, solvent evaporation, interfacial polymerization, microfluidics and centrifugal extrusion amongst many others. However, for industrial scale encapsulation methods, emulsification methods, for example batch emulsification methods, dominate because they are able to meet the large volumes needed for industrial demands. Such methods have recourse to a step forming an emulsion of a hydrophobic oil or wax phase, dispersed in an aqueous continuous phase (or alternatively an emulsion of an aqueous phase, dispersed in a hydrophobic oil or wax continuous phase). These two phases are emulsified using either a homogenizer or a stirred vessel equipped with baffles, and they are stabilized using surfactants or emulsifiers. Alternatively, a reaction at the interface between these two phases is used for the formation of a polymer shell.

However, the industrial scale emulsification methods described above produce emulsions, and subsequently microcapsules, which are polydisperse and/or very large (mean size above 10 $\mu$m).

Furthermore, said methods require water to form one of the phases described above, and surfactants or emulsifiers to stabilize the emulsion, which may react with the active material encapsulated and/or provide contaminants in each phase, and thus decrease the performances of the active material.

A further limitation of those methods is that, depending upon the viscosity of the emulsion, and the chemical nature of the active material encapsulated, the dimensions of the emulsion droplet, and subsequently the microcapsules, vary significantly.

The aim of the present invention is thus to provide a method for producing monodisperse microcapsules encapsulating an active material, notably monodisperse microcapsules having a mean size below 5 $\mu$m, whilst also having a method in which the dimensions of the microcapsules can be accurately controlled and tuned.

Another aim of the present invention is to provide a method eliminating the requirement of water in the fabrication method, which may negatively impact the active material.

Another aim of the present invention is to provide a method eliminating the requirement of surfactant or emulsifier in the fabrication method, which may negatively impact the active material and its surrounding environment.

Thus, the present invention relates to a method for producing microcapsules, in which independent of the chemical properties of the active material encapsulated in the microcapsules, the microcapsule's diameter, shell thickness, chemical functionality and/or release trigger can be easily tuned to meet the application requirements.

Preferably, the present invention relates to a method for producing microcapsules, in which independent of the chemical properties of the active material encapsulated in the microcapsules, the microcapsule's diameter, shell thickness, chemical functionality and/or release trigger can be easily tuned to meet the application requirements.

In addition, the present invention relates to method for producing microcapsules, which can be carried out in the absence of water.

In addition, the present invention relates to method for producing microcapsules, which can be carried out in the absence of surfactant and/or emulsifier.

The present invention relates to an industrial scale method for producing monodisperse populations of solid microcapsules, having a mean size preferably below 5 $\mu$m, using a double emulsion technique.

An object of the present invention is thus a method for preparing solid microcapsules, comprising the steps of:

> a) adding under agitation a composition C1 comprising at least one active material to a cross-linkable liquid composition C2,
> wherein the active material is an additive to be used in the oil industry, composition C1 and composition C2 being immiscible with each other,
so that a first emulsion is obtained, said first emulsion comprising droplets of composition C1 dispersed in composition C2,

b) adding under agitation the first emulsion obtained in step a) to a liquid composition C3,
composition C3 and composition C2 being immiscible with each other,
so that a second emulsion is obtained, said second emulsion comprising droplets dispersed in composition C3,
c) loading the second emulsion obtained in step b) in a mixer which applies a homogeneous controlled shear rate to said second emulsion, said shear rate being from 1 000 s$^{-1}$ to 100 000 s$^{-1}$,
so that a third emulsion is obtained, said third emulsion comprising droplets dispersed in composition C3, and
d) cross-linking the droplets obtained in step c),

so that solid microcapsules dispersed in composition C3 are obtained.

The method of the invention implements a homogeneous controlled high shear (over 1 000 s$^{-1}$) mixing step that uniformly subjects the droplets of the second emulsion to a high shear rate $\gamma$, which fragments the polydisperse population droplets of the second emulsion into a monodisperse population of double droplets (third emulsion).

The middle phase of the third emulsion (composition C2) is then polymerized to form a solid shell, minimizing any coalescence and growth.

The present invention solves a double emulsion method to create microcapsules, which can be prepared in the absence of water, surfactant and/or emulsifier, which may negatively interact with the active material encapsulated and/or induce contaminants into the surrounding media (composition C3).

The method of the invention may be a continuous or a batch method for preparing solid microcapsules.

According to one embodiment, the method of the invention is a batch method.

STEP a)

During step a), a composition C1 is added to a cross-linkable liquid composition C2, said addition being carried out under agitation, meaning that the composition C2 is stirred, typically mechanically, while composition C1 is added, in order to emulsify the mixture of composition C1 and composition C2.

The addition of composition C1 to composition C2 is typically carried out dropwise.

During step a), composition C1 is at a temperature between 0°C and 100°C, preferably between 10°C and 80°C and most preferentially from 15°C to 60°C. During step a), composition C2 is at a temperature between 0°C and 100°C, preferably between 10°C and 80°C and most preferentially from 15°C to 60°C.

In the conditions of the addition of step a), composition C1 and composition C2 are immiscible with each other, which means that the amount (in mass) of composition C1 able to be solubilized in composition C2 is less than or equal to 5%, preferably 1%, preferentially 0,5%, relative to the total mass of composition C2, and that the amount (in mass) of composition C2 able to be solubilized in composition C1 is less than or equal to 5%, preferably 1%, preferentially 0,5%, relative to the total mass of composition C1.

Thus, when it enters in contact with composition C2 under agitation, composition C1 is dispersed in the form of droplets (also called single droplets).

The immiscibility between composition C1 and composition C2 also prevents the active material to migrate from composition C1 to composition C2.

Upon addition of composition C1, composition C2 is stirred in order to form a liquid/liquid emulsion (also called first emulsion, or C1-in-C2 emulsion, or C1/C2 emulsion) comprising droplets of composition C1 (single droplets) dispersed in composition C2.

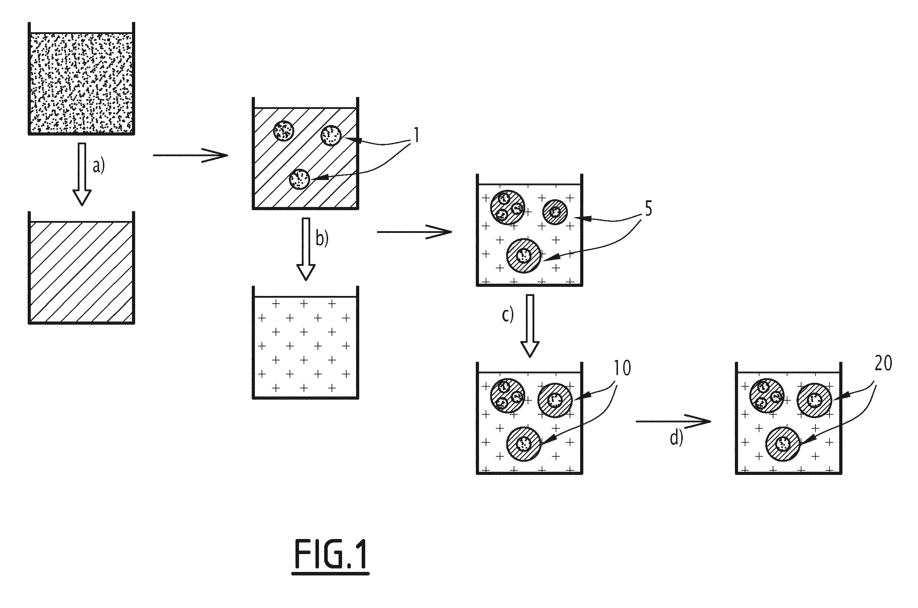

Figure 1 schematically represents the method of the invention and notably schematically represents droplets 1 obtained in step a), by adding composition C1 to composition C2.

In order to implement step a), any type of agitator usually used for making emulsions can be used, such as overhead stirrer (speed of mixing from 100 rpm to 2 000 rpm), rotor-stator mixer (speed of mixing from 100 rpm to 5 000 rpm), or colloidal mill (speed of mixing from 1 000 rpm to 10 000 rpm). Alternatively, ultrasound homogenizer, membrane homogenizer or high pressure homogenizer can also be used.

Composition C1 comprises at least one active material, which is an additive to be used in the oil industry.

According to one embodiment of the invention, composition C1 is a monophasic liquid composition, meaning that the active material is in a pure form or is solubilized into composition C1.

According to a variant of this embodiment, the active material is solubilized into composition C1.

According to this variant, composition C1 may consist of a solution of the active material in an organic solvent, or a mixture of organic solvents.

According to this variant, composition C1 may also consist of a solution of the active material in an aqueous phase, which comprises water and eventually hydrophilic organic solvents.

According to this embodiment, the content of the active material in composition C1 is typically comprised from 1% to 99%, preferably from 5% to 95%, preferentially from 10% to 90%, from 20% to 80%, from 30% to 70%, or from 40% to 60%, by weight relative to the total weight of composition C1.

According to another variant of this embodiment, the active material is present in a pure form in composition C1, meaning that composition C1 consists of the active material.

According to another embodiment of the invention, composition C1 is a biphasic composition, meaning that the active material is dispersed, either in a liquid form or in a solid form, into the composition C1 and is not totally solubilized into composition C1.

According to a variant of said embodiment, the active material is dispersed in the form of solid particles into composition C1.

According to this variant, composition C1 may consist of a dispersion of solid particles of the active material in an organic solvent, or a mixture of organic solvents.

According to this variant, composition C1 may also consist of a dispersion of solid particles of the active material in an aqueous phase, which comprises water and eventually hydrophilic organic solvents.

According to another variant of this embodiment, the active material is dispersed in the form of liquid droplets into composition C1.

According to this variant, composition C1 may consist of an emulsion of droplets of the active material dispersed in an organic solvent, or a mixture of organic solvents.

According to this variant, composition C1 may also consist of an emulsion of droplets of the active material dispersed in an aqueous phase, which comprises water and eventually hydrophilic organic solvents.

According to this embodiment, the content of the active material in composition C1 is typically comprised from 1% to 99%, preferably from 5% to 95%, preferentially from 10% to 90%, from 20% to 80%, from 30% to 70%, or from 40% to 60%, by weight relative to the total weight of composition C1.

When the active material is in the form of particles in composition C1, it is preferably in the form of nanoparticles, either spherical or non-spherical, which may have a size ranging from 1 nm to 1 000 nm.

In the present invention, an additive to be used in the oil industry is an additive to be included in lubricants, lubricating base oils, fuels, bitumens, or in the drilling fluids, sludges or muds, or an additive to be used in oil exploration/production.

## Additives for lubricants

According to one embodiment, the active material comprises at least one additive for lubricants.

Preferred additives for lubricants are selected from detergent additives, anti-wear additives, friction modifiers additives, extreme pressure additives, antioxidant additives, dispersing agents, pour-point depressant additives, anti-foam agents, thickeners and mixtures thereof.

Preferably, the additive for lubricants comprises at least one anti-wear additive for lubricants, at least one extreme pressure additive for lubricants, or mixtures thereof.

Anti-wear and extreme pressure additives for lubricants protect the friction surfaces by forming a protective film adsorbed on these surfaces.

There are a wide variety of anti-wear additives. Preferably, the anti-wear additives for lubricants are selected from phospho-sulfurized additives such as metal alkylthiophosphates, especially zinc alkylthiophosphates, more specifically the zinc dialkyl dithiophosphates or ZnDTP. Preferred compounds are of the formula $Zn((SP(S)(OR1)(OR2))_2$, wherein R1 and R2 identical or different, independently represent an alkyl group, preferably an alkyl group having 1 to 18 carbon atoms.

Amine phosphates are also anti-wear additives that can be employed. However, phosphorus provided by these additives can act as poison of auto catalytic systems because these additives are generators of ashes. These effects can be minimized by partially substituting the amine phosphate by additives bringing no phosphorus, such as for example polysulfides such as sulfurized olefins.

Preferably, the extreme pressure additives for lubricants are selected from borates.

A borate is a salt of an electropositive compound with a boron and oxygen compound, optionally hydrated. Mention may be made for example of the salts of the borate ions $BO_3^{3-}$ and metaborate ions $BO_2^-$. The borate ion $BO_3^{3-}$ may form various polymer ions, for example the triborate ion $B_3O_5^-$, tetraborate ion $B_4O_7^{2-}$ and pentaborate.

In the present application, the term of "borates" is meant to designate the borates of alkali metals, optionally hydrated. These are preferably compounds which can be represented by the general formula:

$$MO_{1/2}.mBO_{3/2}.nH_2O \qquad (I)$$

where M is an alkali metal, preferably sodium or potassium, m is a number of between 2.5 and 4.5 and n is a number of between 0.5 and 2.4. This monomer repeat unit of formula (I) may optionally be repeated several times.

The borates of sodium or potassium are preferred in gear box applications since they have better water tolerance. In particular, preference is given to the borates of sodium or potassium having an elementary metal/boron ratio of approximately between 1:2.5 and 1:4.5, or 1:2.75 to 1:3.25, preferably of the order of 1:3 and in particular the potassium triborates of formula $KB_3O_5.nH_2O$.

To prepare borates in the form of additives which can easily be used in lubricating compositions, a dispersion of solid nanospheres of amorphous borate is formed, for example having a mean diameter of between about 1 nm and 300 nm, dispersed in a lubricating base by dispersants which may be succinimides or sulfonates.

Typically, these spheres have a diameter of between about 10 nm and 200 nm, typically less than 100 nm or less than 50 nm, preferably between 20 nm and 40 nm.

These dimensions may be measured for example under optical microscopy with a magnification of the order of 1000, or using any other techniques known to the person skilled in the art.

An additive for transmission lubricants containing spheres of triborates may be prepared for example by emulsifying an aqueous solution of $K_2B_4O.4H_2O$ and of $KB_5O_8.4H_2O$ in a mineral oil stabilized by succinimide and calcium sulfonate dispersants.

The evaporation of water at 150°C gives borates in their solid form. The viscosity and the polarity of the additive thus obtained is equivalent to the viscosity and polarity of the oil medium in which the dispersion is made.

The preparation of dispersions of borates capable of forming the core of microcapsules according to the invention is described for example in application EP 1 298 191, paragraphs [0064] to [0066]. Typically, these dispersions contain between 5 % and 10 %, even 15 % by weight of Boron element, measured as per standard NFT 60-106.

Advantageously, the active material may comprise from 0.01% to 6% by weight, preferably from 0.05% to 4% by weight, more preferably from 0.1% to 2% by weight of anti-wear and extreme pressure additives for lubricants, relative to the weight of the active material.

Advantageously, the active material may comprise at least one friction modifier additive for lubricants.

The friction modifier additives for lubricants are generally compounds providing metallic elements or compounds free of ash. The compounds providing metallic elements include transition metal complexes such as Mo, Sb, Sn, Fe, Cu, Zn complexes whose ligands are hydrocarbon compounds containing oxygen, nitrogen, sulfur or phosphorus, such as molybdenum dithiocarbamates (MoDTC) or molybdenum dithiophosphates (MoDTP).

Preferably, the friction modifier additives for lubricants are selected from the group consisting of molybdenum dithiocarbamates (MoDTC) and molybdenum dithiophosphates (MoDTP).

The compounds free of ash are usually of organic origin and may be selected from monoesters of fatty acids and polyols, alkoxylated amines, alkoxylated fatty amines, fatty epoxides, borated fatty epoxides, and fatty amines or fatty acid glycerol esters. According to the invention, the fatty compounds comprise at least one hydrocarbon group having from 10 to 24 carbon atoms.

Advantageously, the active material may comprise from 0.01% to 5% by weight, preferably from 0.01% to 5% by weight, more preferably from 0.1% to 2% by weight, preferentially from 0.1% to 2% by weight, of friction modifier additive for lubricants, relative to the total weight of the active material.

Advantageously, the active material according to the invention may comprise at least one antioxidant additive for lubricants.

The antioxidant additives for lubricants are generally used to delay the degradation. This degradation may especially lead to deposit formation, for the presence of sludge, or a viscosity increase. The antioxidant additives act as free radical inhibitors or hydroperoxides scavengers.

Antioxidant additives for lubricants include phenol-type antioxidant additives, amine-type antioxidant additives, and phosphosulphur antioxidant additives. Some of these antioxidant additives, for example phosphosulphur antioxidant additives may be ash generators. Phenol-type antioxidant additives may be free of ash or in the form of neutral or basic metal salts. Antioxidant additives may be chosen from sterically hindered phenols, sterically hindered phenol esters and hindered phenols comprising a thioether bridge, diphenylamines, diphenylamines substituted by at least one $C_1$-$C_{12}$ alkyl group, N,N'-dialkyl-aryl diamines and mixtures thereof.

Preferably, sterically hindered phenols are selected from compounds comprising a phenol group wherein at least one carbon atom which is vicinal to the carbon atom bearing the alcohol function is substituted by at least one $C_1$-$C_{10}$ alkyl group, preferably a $C_1$-$C_6$ alkyl group, preferably a $C_4$ alkyl group, preferably a tert-butyl group.

Amine-type antioxidant additives are another class of antioxidant additives, which can be optionally used in combination with phenol-type antioxidant additives. Examples of amine-type antioxidant additives are aromatic amines, for example aromatic amines of formula NR3R4R5 wherein R3 represents an aliphatic group or an aromatic group, optionally substituted, R4 represents an aromatic group, optionally substituted, R5 represents a hydrogen atom, an alkyl group, an aryl group or a group of formula R6S(O)$_z$R7 wherein R6 represents an alkylene group or an alkenylene group, R7 represents an alkyl group, an alkenyl group or an aryl group, and z represents 0, 1 or 2.

Sulfurized alkyl phenols and alkali or alkaline earth metal salts may also be used as antioxidant additives.

Another class of antioxidant additives for lubricants is that of copper compounds, for examples copper thio- or dithio-phosphates, copper salts of carboxylic acids, copper dithiocarbamates, copper sulphonates, copper phenates, and copper acetylacetonates. Salts of copper I and II, acid salts or succinic anhydride can also be used.

The active material according to the invention can contain all types of antioxidant additives known to those skilled in the art.

Advantageously, the active material comprises at least one antioxidant additive free of ash.

Also advantageously, the active material comprises from 0.5% to 2% by weight of at least one antioxidant additive for lubricants relative to the total weight of the active material.

The active material may also comprise at least one detergent additive for lubricants.

The detergent additives for lubricants generally reduce the formation of deposits on the surface of metal parts by dissolution of secondary oxidation and combustion products.

The detergent additives for lubricants used are generally known to those skilled in the art. The detergent additives can be anionic compounds containing a long lipophilic hydrocarbon chain and a hydrophilic head. The associated cation may be a metal cation of an alkali metal or alkaline earth metal.

The detergent additives for lubricants are preferably selected from alkali metal salts or alkaline earth metal salts of carboxylic acids, sulfonates, salicylates, naphthenates, and phenates salts. Alkali and alkaline earth metals are preferably calcium, magnesium, sodium or barium.

These metal salts generally include the metal in stoichiometric amount or in excess, so in excess of the stoichiometric amount. Then these additives are overbased detergents; excess metal providing the overbased character to the detergent additive is then generally in the form of an insoluble metal salt in the oil, for example a carbonate, hydroxide, oxalate, acetate, glutamate, preferably a carbonate.

Advantageously, the active material may comprise from 2% to 4% by weight of detergent additive for lubricants based on the total weight of the active material.

Also advantageously, the lubricant composition of the invention may also comprise at least one pour-point depressant additive for lubricants.

By slowing down the formation of wax crystals, pour-point depressant additives generally improve the temperature behavior of a lubricant composition.

Pour-point depressant additives for lubricants include alkyl polymethacrylates, polyacrylates, polyarylamides, polyalkylphenols, polyalkylnaphthalenes, and alkylated polystyrenes.

Advantageously, the lubricant composition of the invention may also comprise at least one dispersing agent for lubricants.

The dispersing agent for lubricants may be selected from Mannich bases, succinimides and derivatives thereof.

Also advantageously, the active material may comprise from 0.2% to 10% by weight of dispersing agent for lubricants relative to the total weight of the active material.

The active material may also comprise at least one polymeric viscosity index improver for lubricants.

Polymeric viscosity index improvers for lubricants include polymeric esters, styrene, butadiene and isoprene, hydrogenated or non-hydrogenated, homopolymers or copolymers, polymethacrylates (PMA), or copolymers olefin (OCP).

The active material may also comprise at least one neutralizing agent for lubricants.

Neutralizing agents for lubricants include neutralizing agents against acids, such as sulphuric acid, and can be chosen among amines, such as fatty amines.

**Additives for lubricating base oils**

According to one embodiment, the active material comprises at least one mineral, synthetic or natural, animal or vegetal, lubricating base oil known by the skilled person.

The base oil used in the present invention can be oils of mineral or synthetic origin of groups I to V according to the classes defined in the API classification (or their equivalents according to the ATIEL classification) as summarized below, alone or in a mixture.

| | Saturates content | Sulphur content | Viscosity index (VI) |
|---|---|---|---|
| Group I Mineral oils | < 90% | > 0,03% | 80 ≤ VI < 120 |
| Group II Hydrocracked oils | ≥ 90% | ≤ 0,03% | 80 ≤ VI ≤ 120 |
| Group III Hydrocracked or hydroisomerized oils | ≥ 90% | ≤ 0,03% | ≥ 120 |
| Group IV | PAO Polyalphaolefins | | |

(continued)

|  | Saturates content | Sulphur content | Viscosity index (VI) |
|---|---|---|---|
| Group V | Esters and other bases not included in bases of groups I to IV | | |

The mineral base oils according to the invention include all types of bases obtained by atmospheric and vacuum distillation of crude oil, followed by refining operations such as solvent extraction, deasphalting, solvent dewaxing, hydrotreatment, hydrocracking and hydroisomerization, hydrofinishing.

Mixtures of synthetic oils and mineral oils may be used.

The base oils of the compositions according to the present invention can also be synthetic oils, such as certain esters of carboxylic acids and alcohols, or polyalphaolefins. The polyalphaolefins used as base oils are for example obtained from monomers having 4 to 32 carbon atoms (for example octene, decene), and have a viscosity at 100° C comprised between 1.5 and 15 $mm^2.s^{-1}$ (ASTM D445). Their weight-average molecular mass is typically comprised between 250 and 3000 (ASTM D5296).

Preferably, the base oils of the invention are chosen from the base oils mentioned above having an aromatic content comprised from 0% to 45%, preferentially from 0% to 30%. The aromatic content of an oil is measured according to the UV Burdett method.

**Additives for fuels**

According to one embodiment, the active material comprises at least one additive for fuel.

Preferred additives for fuels are selected from dispersants/detergents, carrier oils, metal deactivators, metal passivators, antioxidants, colorants, antistatic additives, corrosion inhibitors, biocides, markers, thermal stabilizers, emulsifiers, friction reducing agents, surfactants, cetane number improver additives, antifogging agents, additives to improve conductivity, reodorants, lubricity additives, lubricants, anti-sedimentation additives, asphaltenes dispersing additives and mixtures thereof.

Additional additives for fuels may be selected from:

a) cetane number improver additives, particularly (but not limitatively) selected from alkyl nitrates such as 2-ethylhexyl nitrate, aroyl peroxides such as benzyl peroxide, and alkyl peroxides such as di-tert-butyl peroxide;

b) anti-foam additives, particularly (but not limitatively) selected from polysiloxanes, oxyalkylated polysiloxanes, and fatty acid amides from vegetable or animal oils; examples of such additives are given in EP0861182, EP0663000 and EP0736590;

c) detergent additives and/or anti-corrosion additives, particularly (but not limitatively) selected from the group consisting of amines, succinimides, alkenylsuccinimides, polyalkylamines, polyalkyl polyamines, polyetheramines and imidazolines; examples of such additives are given in EP0938535, US2012/0010112 and WO2012/004300;

d) lubricity additives or anti-wear additives, particularly (but not limitatively) selected from the group consisting of fatty acids and their ester or amide derivatives such as glycerol monooleate, and mono- and polycyclic carboxylic acids derivatives; examples of such additives are given in EP0680506, EP0860494, WO1998/04656, EP0915944, FR2772783 and FR2772784;

e) cloud point additives, particularly (but not exclusively) selected from the group consisting of [long chain olefin/(meth) acrylic ester/maleimide] terpolymers and esters of fumaric/maleic acid polymers; examples of such additives are given in EP0071513, EP0100248, FR2528051, FR2528051, FR2528423, EP112195, EP0172758, EP0271385 and EP0291367;

f) anti-settling additives and/or paraffin dispersant additives, particularly (but not limitatively) selected from the group consisting of [(meth)acrylic acid/alkyl (meth)acrylate amidated by a polyamine] copolymers, polyamine alkenylsuccinimides, derivatives of phthalamic acid and double chain fatty amine, alkyl phenol/aldehyde resins; examples of such additives are given in EP0261959, EP0593331, EP0674689, EP0327423, EP0512889, EP0832172, US2005/0223631, US5998530 and WO1993/014178;

g) polyfunctional cold operability additives, chosen in particular from the group consisting of olefin-based polymers and alkenyl nitrates as described in EP0573490;

h) additives improving cold resistance and filterability (CFI), such as ethylene/vinyl acetate copolymers (EVA), ethylene/vinyl propionate copolymers (EVP), ethylene/vinyl acetate/vinyl versatate terpolymers (E/VA/VEOVA), maleic anhydride/alkyl(meth)acrylate amidated copolymers obtainable by reacting a maleic anhydride/alkyl(meth)acrylate copolymer and an alkylamine or polyalkylamine having a hydrocarbon chain in $C_4$-$C_{30}$, preferably in $C_{12}$-$C_{24}$, alpha-olefin/maleic anhydride amidated copolymers obtainable by reacting an alpha-olefin/maleic anhydride copolymer and an alkylamine or polyalkylamine, the alpha-olefin may be selected from $C_{12}$-$C_{40}$

alpha-olefin, preferably $C_{16}$-$C_{20}$ alpha-olefin and the alkylamine or polyalkylamine having preferably a hydrocarbon chain in $C_4$-$C_{30}$, preferably in $C_{12}$-$C_{24}$; examples of such additives are given in EP01692196, WO2009/106743, WO2009/106744, US4758365 and US4178951;

i) other hindered phenol-type antioxidant additives or amine-type antioxidant additives such as alkylated paraphenylene diamine;

j) metal passivators, such as triazoles, alkylated benzotriazoles and alkylated tolutriazoles;

k) metals sequestering additives, such as disalicylidene propane diamine (DMD);

l) acid neutralizing additives, such as cyclic alkylamines.

## Additives for bitumens

According to one embodiment, the active material comprises at least one additive for bitumens.

Preferred additives for bitumens are selected from elastomers crosslinkable with sulfur, sulfur-donor coupling agent or crosslinking agent, and adhesion agents and/or surfactants.

The elastomer may be selected from polybutadiene, polyisoprene, polychloroprene, butadiene/isoprene copolymers, polynorbornene, polyisobutylene, butyl rubber, high density polyethylene, low density polyethylene, polypropylene, polybutene, ethylene copolymers statistical/propylene (EP), ethylene terpolymers statistics/propylene/diene (EPDM), ethylene/styrene copolymers, and ethylene/butene/styrene.

Sulfur-donor coupling agent or crosslinking agent may be selected from elemental sulfur, hydrocarbyl polysulphides, and vulcanisation accelerators sulfur donors.

Adhesion agents and/or surfactants may be selected from derivatives of alkylamines, derivatives of alkyl polyamines, alkylamidopolyamines derivatives, alkyl derivatives amidopolyamines and derivatives of quaternary ammonium salts.

## Additives for drilling fluids, sludges or muds

According to one embodiment, the active material comprises at least one additive for drilling fluids, sludges or muds known by the skilled person, particularly those which are well suitable for deeply buried boreholes, so-called offshore holes in deep water and/or for sidetracked holes or with a long offset.

Various types of drilling fluids, sludges or muds may be used, such as fluids with water, containing water and additives for increasing the viscosity, fluids with oil and emulsions of the water-in-oil type or reverse emulsions or of the oil-in-water type, as described in particular in U.S. Pat. No. 2,816,073. This document indicates that the oil phase may be formed by different hydrocarbon fractions, such as kerosene cuts and gas oils and strongly alkylated and branched petroleum cuts.

In muds with water (water base mud, abbreviated as WBM), the drilling fluid is water; muds with water are generally reserved for not very technical applications and for onshore drillings (on land), or very shallow (a few meters) offshore. In muds with oil (oil base mud abbreviated as OBM), the drilling fluid is a hydrocarbon fluid selected from various compounds available on the market.

These drilling fluids with oil are classified into three large categories:

- Group I comprises strongly aromatic drilling fluids containing from 5% to 30% of mono-aromatic and/or poly-aromatic compounds stemming from the refining of crude oils, i.e. gas oils and conventional mineral oils;
- Group II comprises moderately aromatic drilling fluids stemming from the refining of crude oil and containing from 0.5% to 5% of mono-aromatic and/or poly-aromatic compounds such as unconventional or slightly hydrotreated mineral oils often called Low Toxicity Mineral Oil (LTMO); and
- Group III comprises slightly aromatic drilling fluids, i.e. containing less than 0.5% of total aromatics including less than 10 ppm of polyaromatics. These fluids generally stem from chemical synthesis or severely hydrotreated, hydrocracked or hydroisomerized refined cuts. They may also be compounds of synthetic paraffins stemming from the Fisher Tropsch process, polymerized olefins (Internal Olefins or 10, Linear Alpha Olefins or LAO, and Poly Alpha Olefins or PAO) as well as of esters.

The fluids of Group III are said to be synthetic according to the definition of the OSPAR protocol according to Ruling 2000/3 "on the Use of Organic-Phase Drilling Fluids (OPF) and the Discharge of OPF-Contaminated Cuttings"; these fluids of Group III are preferred by the operators not only for their heat stability, their resistance to oxidation, their low toxicity related to their low aromaticity, their non-irritating nature and respectful of the environment but also for their observance of safety requirements, notably by a high flash point and lesser volatility. It is known that the use of petroleum cuts (notably Groups I or II) which have high contents of aromatic compounds in drilling muds has high risks of toxicity particularly for marine life, if it is chosen to discharge them into the sea, for example in the case of offshore drillings. The deposit of significant amounts of these products on the seabed has led the bordering countries to adopt increasingly strict legislations, forcing the operators of offshore oil drillings, notably in the North Sea, to search for products as biodegradable and non-toxic as possible.

The drilling fluids, sludges or muds described in WO2011/073893 and WO2014/102237 may also be used as active material in the framework of the invention.

### Additives for oil exploration/production

Preferred additives for oil exploration/production are selected from additives used for well stimulation (such as acids), additives used for flow assurance in wells (such as deposit inhibitors), additives for Enhanced Oil Recovery, surfactants, contrast agents, micro or nanocaptors, biocides for oil exploration/production, pour-point depressant additives (PPD) and low dosage hydrate inhibitors (LDHI).

Composition C2 is a cross-linkable liquid composition, meaning that it is a composition able to polymerize (cross-link) to yield a solid material, which will from the polymerized shell of the solid microcapsules of the invention.

Composition C2 is typically a prepolymer formulation able to polymerize into a solid material.

According to one embodiment of the invention, composition C2 comprises at least one monomer or polymer, at least one cross-linker and at least one initiator of polymerization.

According to this embodiment, composition C2 comprises typically from 50% to 95% by weight of monomer or polymer, or mixture of monomers or polymers, relative to the total weight of composition C2.

According to this embodiment, composition C2 comprises typically from 1% to 20% by weight of cross-linker or mixture of cross-linkers, relative to the total weight of composition C2.

According to this embodiment, composition C2 comprises typically from 0.1% to 5% by weight of initiator or mixture of initiators, relative to the total weight of composition C2.

By "monomer or polymer", it should be understood any building block suitable for forming a solid material by polymerization, either alone or in combination with others monomers or polymers.

The monomers may be selected from monomers bearing at least one reactive function selected from the group consisting of acrylate; methacrylate; vinyl ether; N-vinyl ether; mercaptoester; thiolen; siloxane; epoxy; oxetan; urethane; isocyanate; and peroxide.

Notably, the monomers may be selected from monomers bearing at least one of the above reactive functions and additionally bearing one or more functions selected from the group consisting of primary, secondary, and tertiary alkylamine; quaternary amine; sulfate; sulfonate; phosphate; phosphonate; hydroxyl; carboxylate; and halogen.

The polymers may be selected from polyethers, polyesters, polyurethanes, polyureas, polyethylene glycols, polypropylene glycols, polyamides, polyacetals, polyimides, polyolefins, polysulfides, and polydimethylsiloxanes, said polymers bearing at least one reactive function selected from the group consisting of acrylate; methacrylate; vinyl ether; N-vinyl ether; mercaptoester; thiolen; siloxane; epoxy; oxetan; urethane; isocyanate; and peroxide.

Examples of such polymers include but are not limited to: 2-(1-naphthyloxy)-ethyl acrylate, 2-(2-naphthyloxy)-ethyl acrylate, 2-(2-naphthyloxy)-ethyl methacrylate, sorbitol dimethacrylate, acrylamide, 2-propeneamide, 2-(1-naphthyloxy) ethanol, 2-(2-naphthyloxy) ethanol, 1-chloro-2,3-epoxypropane, poly(n-butyl isocyanate), poly(N- vinyl carbazole), poly(N-vinyl pyrrolidone), poly(p-benzamide), poly(p-chlorostyrene), poly(p-methyl styrene), poly(p-phenylene oxide), poly(p-phenylene sulfide), N-(methacryloxyethyl)succinimide, polybenzimidazol, polybutadiene, butylene terephthalate, polychloral, polychloro trifluoro ethylene, polyether imide, polyether ketone, polyether sulfone, polyhydridosilsesquioxane, poly(m-phenylene isophthalamide), methyl 2-acrylamido-2-methoxyacetate, 2-acrylamido-2-methylpropanesulfonic acid, mono-butyl maleate, butylmethacrylate, N-tert-butylmethacrylamide, N-n-butylmethacrylamide, cyclohexylmethacrylamide, m-xylenebisacrylamide 2,3-dimethyl-1,3-butadiene,N,N-dimethylmethacrylamide, n-butyl methacrylate, cyclohexyl methacrylate, isobutyl methacrylate, 4-cyclohexylstyrene, cyclol acrylate, cyclol methacrylate, diethyl ethoxymethylenemalonate, 2,2,2-trifluoroethyl methacrylate, 1,1,1-trimethylolpropane trimethacrylate, methacrylate, N,N-dimethylanilin, dihydrazide, isophthalic dihydrazine, isophthalic acid, dimethyl benzilketal, epichlorohydrin, ethyl-3,3-diethoxyacrylate, ethyl-3,3-dimethylacrylate, ethyl vinylketone, vinyl ethylketone, penten-3-one, formaldehyde diallyl acetal, fumaronitrile, glyceryl propoxy triacrylate, glyceryl trimethacrylale, glycidoxypropyltrimethoxysilane, glycidyl acrylate, n-heptyl acrylate, acrylic acid n-heptyl ester, n-heptyl methacrylate, 3-hydroxypropionitrile, 2- hydroxypropyl acrylate, 2-hydroxypropyl methacrylate, N-(methacryloxyethyl)phthalimide, 1,9-nonanediol diacrylate, 1,9-nonanediol dimethacrylate, N-(n-propyl) acrylamide, ortho-phthalic acid, iso-phthalic acid, 1,4-benzenedicarboxylic acid, 1,3-benzenedicarboxylic acid, phthalic acid, mono-2-acryloxyethyl ester, terephthalic acid, phthalic anhydride, polyethylene glycol diacrylate, polyethylene glycol methacrylate, polyethylene glycol dimethacrylate, isopropyl acrylate, sorbitol pentaacrylate, vinyl bromoacetate, polychloroprene, poly(di-n-hexyl silylene), poly(di-n-propyl siloxane), polydimethyl silylene, polydiphenyl siloxane, vinyl propionate, vinyl triacetoxysilane, vinyl tris-tert-butoxysilane, vinyl butyral, vinyl alcohol, vinyl acetate, ethylene co-vinyl acetate, bisphenol-A polysulfone, 1,3-dioxepane, 1,3-dioxolane, 1,4-phenylene vinylene, poly(2,6-dimethyl-1 A-phenylene oxide), poly(4-hydroxy benzoic acid), poly(4- methyl pentene-1), poly(4-vinyl pyridine), polymethylacrylonitrile, polymethylphenylsiloxane, polymethylsilmethylene, polymethylsilsesquioxane, poly(phenylsilsesquioxane), poly(pyromellitimide-1.4-diphenyl ether), tetrahydrofuran, polythiophene, poly(trimethylene oxide), polyacrylonitrile, ether sulphone, ethylene-co-vinyl acetate, perfluor ethylen propylene, poly(perfluoralkoxyl alkan), poly(styrene-acrylonitrile).

By "cross-linker", it should be understood any compound carrying at least two reactive functions suitable for cross-linking a monomer or a polymer, or a mixture of monomers or polymers, when polymerized.

The cross-linker may be selected from molecules bearing at least two functions selected from the group consisting of acrylate; methacrylate; vinyl ether; N-vinyl ether; mercaptoester; thiolen; siloxane; epoxy; oxetan; urethane; isocyanate; and peroxide.

By "initiator", it should be understood any compound able to fragment when it is excited by a source of energy.

Preferably, composition C2 is a photocross-linkable liquid composition and the initiator is thus a photoinitiator for polymerization.

The initiator may be selected from the group consisting of:

- $\alpha$-hydroxyketones, such as 2-hydroxy-2-methyl-1-phenyl-1-propanone;
- $\alpha$-aminoketones, such as 2-benzyl-2-dimethylamino-1-(4-morpholinophenyl)-butanone-1;
- $\alpha$-dicarbonyl derivatives, such as benzildimethyl ketal;
- acylphosphine oxides, such as bis-acylphosphine oxide;
- aromatic ketones, such as benzophenone;
- phenylglyoxylates, such as phenyl glyoxylic acid methyl ester;
- oxime esters, such as [1-(4-phenylsulfanylbenzoyl)heptylideneamino]benzoate;
- sulfonium salts,
- iodonium salts, and
- oxime sulfonates.

According to a variant of the invention, composition C2 may also comprise an additional monomer or polymer able to enhance the properties of the microcapsules shell and/or to impart the microcapsules shell with new properties, such as to make the microcapsules shell responsive to an external trigger.

Such an additional monomer or polymer may be a monomer or polymer bearing a pH-sensitive group, a temperature-sensitive group, a UV-sensitive group or IR-sensitive group.

These additional monomers or polymers may induce the rupture of the solid microcapsules and the subsequent release of their content, when stimulated by a pH, a temperature, a UV or a IR external trigger.

The additional monomer or polymer may be selected from the monomers or polymers bearing at least one reactive function selected from the group consisting of acrylate; methacrylate; vinyl ether; N-vinyl ether; mercaptoester; thiolen; siloxane; epoxy; oxetan; urethane; isocyanate; and peroxide; and also bearing any one of the following groups:

- a hydrophobic group such as a fluorinated group, for instance trifluoroethyl methacrylate, trifluoroethyl acrylate, tetrafluoropropyl methacrylate, pentafluoropropyl acrylate, hexafluorobutyl acrylate, or fluorophenyl isocyanate;
- a pH-sensitive group such as primary, secondary or tertiary amine, carboxylic acid, phosphate, sulfate, nitrate, or carbonate;
- a UV-sensitive or UV-cleavable group (also called photochromic group) such as azobenzene, spiropyran, 2-diazo-1,2-naphthoquinone, o-nitrobenzyl, thiol, or 6-nitro-veratroyloxycarbonyl, for instance poly(ethylene oxide)-block-poly(2-nitrobenzylmethacrylate), and other block copolymers, as described for instance in Liu et al., Polymer Chemistry 2013, 4, 3431-3443;
- an IR-sensitive or IR-cleavable group such as o-nitrobenzyl or 2-diazo-1,2-naphthoquinone, for instance polymers described in Liu et al., Polymer Chemistry 2013, 4, 3431-3443; and
- a temperature sensitive group such as poly(N-isopropylacrylamide).

Alternatively, composition C2 may also comprise nanoparticles bearing on their surface at least one reactive function selected from the group consisting of acrylate; methacrylate; vinyl ether; N-vinyl ether; mercaptoester; thiolen; siloxane; epoxy; oxetan; urethane; isocyanate; and peroxide. These nanoparticles may generate heat when stimulated by an external electromagnetic field, inducing the rupture of the solid microcapsules and the subsequent release of their content.

Suitable nanoparticles may be selected from gold, silver, and titanium dioxide nanoparticles (which react to an IR field) and iron oxide nanoparticles (which react to a magnetic field).

According to one embodiment, the viscosity of composition C2 at 25°C is from 500 mPa.s to 100 000 mPa.s.

Preferably, the viscosity of composition C2 at 25°C is from 1 000 mPa.s to 50 000 mPa.s, preferentially from 5 000 mPa.s to 25 000 mPa.s, for example from 10 000 mPa.s to 20 000 mPa.s.

Preferably, the viscosity of composition C2 is higher than the viscosity of composition C1.

According to this embodiment, independent of the active material viscosity or chemical properties, the kinetic destabilization of the droplets of first emulsion is significantly slow, which enables the shell of the microcapsules to be polymerized during step d), providing thermodynamic stabilization before kinetic destabilization can arise.

Thus, the relatively high viscosity of composition C2 ensures the stability of the first emulsion obtained in step a).

This embodiment solves the limitation associated with large variance in microcapsule properties that usually occurs when varying the active material for encapsulation.

Preferably, there is a low interfacial tension between composition C1 and composition C2. Suitable interfacial tensions typically range from 0 mN/m to 50 mN/m, preferably from 0 mN/m to 20 mN/m.

The low interfacial tension between composition C1 and composition C2 also advantageously ensures the stability of the first emulsion obtained in step a).

According to one embodiment, the volume of composition C1 to the volume of composition C2 ratio is from 1:10 to 10:1.

Preferably, said ratio is from 1:3 to 5:1, preferentially from 1:2 to 4:1.

Said ratio can be tailored according to these ranges in order to control the thickness of the resulting microcapsule polymerized shell.

## STEP b)

During step b), the first emulsion obtained in step a) is added to a liquid composition C3, said addition being carried out under agitation, meaning that the composition C3 is stirred, typically mechanically, while the first emulsion is added, in order to emulsify the mixture of composition C1, composition C2, and composition C3.

The addition of the first emulsion to composition C3 is typically carried out dropwise.

During step b), the first emulsion is at a temperature typically comprised from 15°C to 30°C. During step b), composition C3 is at a temperature typically comprised from 15°C to 30°C.

In the conditions of the addition of step b), composition C2 and composition C3 are immiscible with each other, which means that the amount (in mass) of composition C2 able to be solubilized in composition C3 is less than or equal to 5%, preferably 1%, preferentially 0,5%, relative to the total mass of composition C3, and that the amount (in mass) of composition C3 able to be solubilized in composition C2 is less than or equal to 5%, preferably 1%, preferentially 0,5%, relative to the total mass of composition C2.

Thus, when it enters in contact with composition C3 under agitation, the first emulsion (C1-in-C2 or C1/C2) is dispersed in the form of droplets (also called double droplets), the dispersion of these droplets of first emulsion in the continuous phase C3 being called the second emulsion.

Typically, a double droplet formed during step b) corresponds to a single droplet of composition C1 as described above, surrounded by a shell of composition C2 which encapsulates totally said single droplet.

The double droplet formed during step b) may also comprise at least two single droplets of composition C1 as described above, said single droplets being surrounded by one shell of composition C2 which encapsulates totally said single droplets.

Thus, said double droplets comprise a core consisting of one or more single droplets of composition C1, and a layer of composition C2 surrounding said core.

The resulting second emulsion is generally a polydisperse double emulsion (C1-inC2-in-C3 emulsion or C1/C2/C3 emulsion), meaning that the double droplets do not have a sharp distribution of size in said second emulsion.

Figure 1 schematically represents the method of the invention and notably schematically represents polydisperse droplets 5 obtained in step b), by adding into composition C3 the first emulsion of droplets 1 dispersed in composition C2.

The immiscibility of composition C2 with composition C3 prevents the layer of composition C2 to mix with composition C3 and thus assures the stability of the second emulsion.

The immiscibility of composition C2 with composition C3 also prevents the active material in composition C1 to migrate from the core of the droplets to composition C3.

In order to implement step b), any type of agitator usually used for making emulsions can be used, such as overhead stirrer (speed of mixing from 100 rpm to 2 000 rpm), rotor-stator mixer (speed of mixing from 100 rpm to 5 000 rpm), or colloidal mill (speed of mixing from 1 000 rpm to 10 000 rpm). Alternatively, ultrasound homogenizer, membrane homogenizer or high pressure homogenizer can also be used.

Preferably, composition C3 is an oily phase.

Preferably, composition C3 comprises at least one lubricating base oil, as defined above.

According to one embodiment, the viscosity of composition C3 at 25°C is higher than the viscosity at 25°C of the first emulsion obtained in step a).

Preferably, the viscosity of composition C3 measured at 100°C (ASTM D445) is from 5 mPa.s to 2 000 mPa.s.

According to this embodiment, given the higher viscosity of the continuous phase (composition C3) compared to the first emulsion, the kinetic destabilization of the double droplets (second emulsion) is significantly slow, providing thermodynamic stabilization before kinetic destabilization can arise.

Thus, the relatively high viscosity of composition C3 ensures the stability of the second emulsion obtained in step b).

Preferably, there is a low interfacial tension between composition C2 and composition C3.

The low interfacial tension between composition C2 and composition C3 also ensures the stability of the second emulsion obtained in step b).

According to one embodiment, during step b), the volume of the first emulsion to the volume of composition C3 ratio is from 1:10 to 10:1.

Preferably, said ratio is from 1:9 to 3:1, preferentially from 1:8 to 1:1, for example from 1:6 to 1:2.

Said ratio can be tailored according to these ranges in order to control the overall content of encapsulated active material in the resulting population of polymerized microcapsules.

**STEP c)**

In step c), the second emulsion obtained in step b), consisting of polydisperse droplets dispersed in a continuous phase, is sheared in a mixer, which applies a homogeneous controlled shear rate, comprised from $1\,000\ s^{-1}$ to $100\,000\ s^{-1}$.

Surprisingly, the inventors have found that this emulsification process creates, through a fragmentation mechanism, a double emulsion with improved size variance, i.e. a double emulsion consisting of monodisperse double droplets (also called third emulsion).

In a mixing device, the shear rate is said to be homogeneous and controlled when, irrespective of the variation in the time of the shear rate, it passes through a maximum value which is the same for all parts of the emulsion, at a given instant which can differ from one point in the emulsion to another. The exact configuration of the mixing device is not essential according to the invention provided that, on leaving this device, the entire emulsion has been subjected to the same maximum shear. Suitable mixers for carrying out step c) are notably described in US5938581.

The second emulsion can undergo homogeneous controlled shear when circulated through a cell formed by:

- two concentric rotating cylinders (also called Couette-geometry mixer),
- two parallel rotating discs, or
- two parallel oscillating plates.

The shear rate applied to the second emulsion is comprised from $1\,000\ s^{-1}$ to $100\,000\ s^{-1}$, preferably from $1\,000\ s^{-1}$ to $50\,000\ s^{-1}$, preferentially from $2\,000\ s^{-1}$ to $20\,000\ s^{-1}$.

During step c), the second emulsion is introduced in the mixer and is then submitted to a shear stress which results in the formation of a third emulsion. Said third emulsion is chemically the same as the second emulsion, but it consists in monodisperse double droplets, whereas the second emulsion consisted in polydisperse double droplets. The third emulsion typically consists of a dispersion of double droplets comprising a core consisting of one or more single droplets of composition C1, and a layer of composition C2 surrounding said core, said double droplets being dispersed in composition C3.

The difference between the second emulsion and the third emulsion is the variance in size of the double droplets: the droplets of the second emulsion are polydisperse in size whereas the droplets of the third emulsion are monodisperse, thanks to the fragmentation mechanism described above.

Preferably, the second emulsion is introduced in the mixer continuously, meaning that the amount of double emulsion introduced at the inlet of the mixer is the same as the amount of third emulsion outgoing from the outlet of the mixer.

Since the size of the droplets of the third emulsion subsequently corresponds to the size of the solid microcapsules after polymerization, it is possible to tune the microcapsule size and shell thickness by adjusting the shear rate during step c), with a strong correlation between decreasing droplet size and increasing shear rate.

This allows the resultant dimensions of the microcapsules to be tailored by varying the shear rate applied during step c).

According to a preferred embodiment, the mixer implemented in step c) is a Couette-geometry mixer, comprising two concentric cylinders, an outer cylinder of inner radius $R_o$ and an inner cylinder of outer radius $R_i$, the outer cylinder being fixed and the inner cylinder being rotating with an angular velocity w.

A Couette-geometry mixer suitable for the method of the invention may be purchased from T.S.R. Company France.

According to one embodiment, the angular velocity $\omega$ of the rotating inner cylinder of the Couette-geometry mixer is over than or equals to $30\ rad.s^{-1}$.

For example, the angular velocity w of the rotating inner cylinder is about 70 rad.s$^{-1}$.

The dimensions of the fixed outer cylinder of the Couette-geometry mixer can be chosen to modulate the gap (d = $R_o$ - $R_i$) between the rotating inner cylinder and the fixed outer cylinder.

According to one embodiment, the gap d = $R_o$ - $R_i$ between the two concentric cylinders of the Couette-geometry mixer is from 50 $\mu$m to 1 000 $\mu$m, preferably from 100 $\mu$m to 500 $\mu$m, for example from 200 $\mu$m to 400 $\mu$m.

For example, the gap d between the two concentric cylinders is 100 $\mu$m.

According to the embodiment of the invention implementing a Couette-geometry mixer, during step c), the second emulsion is introduced at the inlet of the mixer, typically via a pump, and is directed to the gap between the two concentric cylinders, the outer cylinder being fixed and the inner cylinder being rotating at an angular velocity $\omega$.

The second emulsion is thus submitted to a shear stress which results in the formation of a third emulsion, at the outlet of the mixer. Said third emulsion is chemically the same as the second emulsion, but it consists in monodisperse double droplets, whereas the second emulsion consisted in polydisperse double droplets. The third emulsion typically consists of a dispersion of double droplets comprising a core consisting of one or more single droplets of composition C1, and a layer of composition C2 surrounding said core, said double droplets being dispersed in composition C3.

The difference between the second emulsion and the third emulsion is the variance in size of the double droplets: the droplets of the second emulsion are polydisperse in size whereas the droplets of the third emulsion are monodisperse, thanks to the fragmentation mechanism described above.

Preferably, the second emulsion is introduced at the inlet of the mixer continuously, meaning that the amount of double emulsion introduced at the inlet of the mixer is the same as the amount of third emulsion outgoing from the outlet of the mixer.

When the double emulsion is in the gap between the two cylinders, the shear rate $\gamma$ applied to said emulsion is given by the following equation:

$$\gamma = \frac{R_i \omega}{(R_o - R_i)}$$

wherein $\omega$ is the angular velocity of the rotating inner cylinder, $R_o$ is the inner radius of the fixed outer cylinder, and $R_i$ is the outer radius of the rotating inner cylinder.

The parameters of the Couette-geometry mixer (i.e. the angular velocity and the gap between the cylinders) are tuned so that the shear rate $\gamma$ is from 1 000 s$^{-1}$ to 20 000 s$^{-1}$.

Since the size of the droplets of the third emulsion subsequently corresponds to the size of the solid microcapsules after polymerization, it is possible to tune the microcapsule size and shell thickness by adjusting the shear rate $\gamma$ during step c), with a strong correlation between decreasing droplet size and increasing shear rate.

This allows the resultant dimensions of the microcapsules to be tailored by varying either the angular velocity of the rotating cylinder, or the inner radius of the fixed outer cylinder, or both.

Figure 1 schematically represents the method of the invention and notably schematically represents monodisperse droplets 10 obtained in step c).

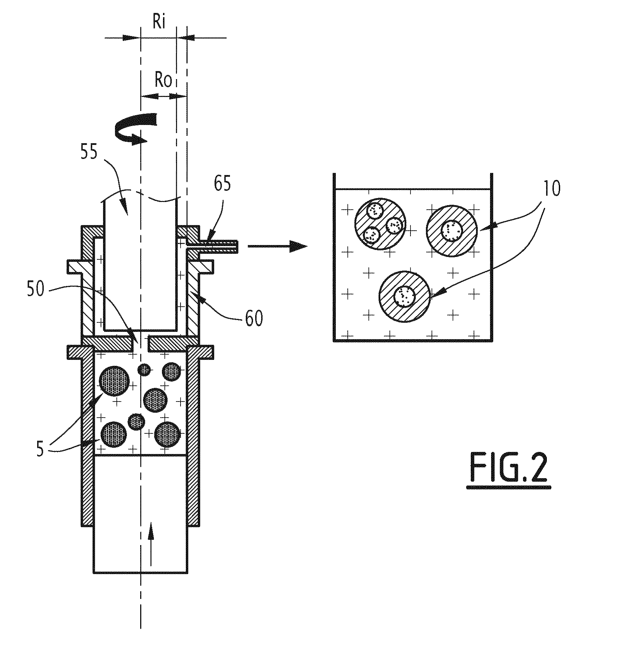

Figure 2 schematically represents a Couette-geometry mixer suitable for the preferred embodiment of the method of the invention and notably schematically represents the polydisperse droplets 5 of the second emulsion being introduced at the inlet 50, in the gap between the rotating inner cylinder 55 of outer radius $R_i$ and the fixed outer cylinder 60 of inner radius $R_o$, thus providing the monodisperse droplets 10 of third emulsion outgoing through the outlet 65.

**STEP d)**

During step d), the double droplets of the third emulsion are cross-linked to provide microcapsules encapsulating the active material.

More particularly, the shell of these double droplets consisting of the cross-linkable composition C2 is cross-linked and thus converted into a viscoelastic polymeric shell matrix, encapsulating and protecting the active material from release in the absence of a mechanical trigger.

The mechanical properties of the polymerized shell of the microcapsules can be tailored by modifying the ratio of monomer or polymer to cross-linker within the initial composition C2.

The composition obtained after step d), comprising the microcapsules of the invention dispersed in composition C3, is ready-to-use and does not need to be washed or does not need any post-treatment.

The solid microcapsules obtained according to the method of the invention have an average diameter (as measured by image analysis of optical microscopy images or transmission electron microscopy images) preferably comprised from 0.1 $\mu$m to 10 $\mu$m, preferably from 0.2 $\mu$m to 5 $\mu$m.

The thickness of the polymerized shell of the solid microcapsules obtained according to the method of the invention is typically between 10 nm and 2.5 $\mu$m, preferably from 100 nm to 1 000 nm.

According to one embodiment, during step d), the cross-linking is carried out by submitting the double droplets obtained in step c) to a source of light, preferably a source of UV light, able to initiate the cross-linking of composition C2.

Preferably, the source of UV light emits in the range of 100 nm - 400 nm.

The double droplets obtained in step c) are typically submitted to a source of light for 1 minute to 15 minutes.

According to this embodiment, the cross-linkable composition C2 is photocross-linkable and the polymerization is thus photo-initiated.

Figure 1 schematically represents the method of the invention and notably schematically represents monodisperse polymerized microcapsules 20 obtained in step d), after polymerization of the shell of composition C2.

The method of the invention allows a great versatility and is thus suitable for the encapsulation of various active materials, independent of their viscosity or chemical properties.

The method of the invention allows the tailoring of the shell thickness and/or the size of the microcapsules by adjusting the ratio of composition C1 over composition C2 in step a), and/or the shear rate applied by the Couette-geometry mixer in step c).

The method of the invention allows the tailoring of the overall content of active material in the resulting composition obtained after step d), by adjusting the ratio of first emulsion over composition C3 in step b).

The method of the invention allows the tailoring of the mechanical susceptibility, the flexibility, and/or the brittleness of the solid microcapsules (particularly of the shell), by adjusting the content of cross-linker in composition C2.

## Microcapsules and composition

The method of the invention enables the preparation of solid microcapsules, comprising a core consisting of the composition C1 comprising an active material, said core being encapsulated by a solid (polymerized or cross-linked) shell of polymerized composition C2.

The solid microcapsules of the present invention are intended to be used in the oil industry, such as in a lubricant composition, in a fuel composition, in a bitumen composition, or in a drilling fluid, sludge or mud, or in the field of oil exploration/production.

The core of the microcapsules may consist of a single droplet or several droplets of composition C1.

The core of the microcapsules may be a liquid solution, either aqueous or oily, a liquid/liquid emulsion, or a dispersion of (nano)particles in a liquid composition.

The microcapsules of the invention are dispersed in a continuous liquid composition C3.

The method of the invention enables the preparation of monodisperse solid microcapsules, thanks to the specific fragmentation mechanism described above in step c).

One object of the present invention is also a series of solid microcapsules, said microcapsules being obtainable by the method of the invention above-defined, each microcapsule comprising:

- a core comprising a composition comprising at least one active material as defined above, and
- a solid cross-linked shell surrounding said core,

wherein the standard deviation of microcapsule diameter distribution is below 25% or below 1 $\mu$m.

The series of solid microcapsules of the invention is a monodisperse population of microcapsules.

The population of microcapsules can be imaged with an optical microscope or transmission electron microscope and the subsequent images can be treated with an image analysis software in order to extract the distribution of microcapsule diameters and thus determine the monodispersity of the population of microcapsules.

Alternatively, techniques based on light scattering, sieving or centrifugation may be used.

According to one embodiment, the series of solid microcapsules of the invention has a standard deviation of microcapsule shell thickness distribution below 25% or below 300 nm.

According to one embodiment, the series of solid microcapsules is characterized in that the average diameter D of the solid microcapsules is less than or equal to 10 $\mu$m, preferably from 0.1 $\mu$m to 5 $\mu$m, more preferably from 0.1 $\mu$m to 3 $\mu$m.

According to one embodiment, the solid microcapsules of the invention are surfactant-free.

According to one embodiment, the solid microcapsules of the invention are water-free.

The method of the invention enables the preparation of such microcapsules, notably monodisperse microcapsules, having a mean size less than 10 $\mu$m.

The microcapsules of the invention, and the continuous phase in which they are dispersed, are advantageously free from any contaminant, such as surfactant, emulsifier, or unreacted monomers.

One object of the present invention is also a composition comprising a series of solid microcapsules as defined above, said microcapsules being dispersed in a continuous liquid phase.

Said continuous liquid phase typically corresponds to composition C3.

The composition of the present invention is intended to be used in the oil industry or in the field of oil exploration/production.

The composition of the invention is for example a lubricant composition, a fuel composition, a bitumen composition, or a drilling fluid, sludge or mud.

An object of the present invention is also a composition comprising a series of solid microcapsules according to the invention and a lubricating base oil as defined above.

The composition of the invention is typically a dispersion wherein the solid microcapsules are dispersed in a lubricating base oil.

An object of the present invention is also a method for releasing an active material, comprising a step of applying a mechanical shear stress to a composition comprising a series of solid microcapsules as defined above.

Typically, the composition of the invention is used in a gearbox or in an engine of a vehicle, such as in a gearbox or in an engine of a car, to provide lubrication properties.

## EXAMPLES

### Example 1 - Preparation of solid capsules

Dispersions of solid capsules were prepared according to the following procedure, which corresponds to the method of the invention.

- a first emulsion was produced through the drop-wise addition and mixing of Composition C1 to Composition C2 at a predetermined volume fraction, Composition C1 and/or Composition C2 were optionally previously heated in order to be melted,
- a second emulsion was then produced by adding and mixing the first emulsion to Composition C3 at a predetermined volume fraction,
- the polydisperse double emulsion thus obtained was then added to a Couette mixer as represented in Figure 2, and sheared at an injection speed of 8 mL/min, and
- the monodisperse double emulsion thus obtained was finally UV polymerized to provide a dispersion of solid capsules.

The percentages below are given in weight.

*Encapsulation of borates*

Dispersion 1

|  |  |
|---|---|
| Composition C1: | OLOA 9750 - borate additive (Oronite) (100%) |
| Composition C2: | CN 991 (Sartomer, Arkema) (84.6%) |
|  | HDDA - hexanediol diacrylate (Sigma Aldrich) (9.4%) |
|  | 2,2,2-Trifluoroethyl acrylate (Sigma Aldrich) (5%) |
|  | Darocure 1173 (Ciba) (1%) |
| Composition C3: | PAO 100 (Exxon Mobil) (100%) |
| First emulsion: | C1 (50%) in C2 (50%) |
| Second emulsion: | first emulsion (13.32%) in C3 (86.68%) |
| Shear rate: | 6 248 s$^{-1}$ |
| UV exposure: | 3 minutes |

Dispersion 1 contained monodisperse solid capsules encapsulating borates, having a shell thickness of 0.40 μm (as measured by Transmission Electron Microscopy).

Dispersion 2

Composition C1:      OLOA 9750 - borate additive (Oronite) (100%)
Composition C2:      CN 991 (Sartomer, Arkema) (84.6%)
                     HDDA - hexanediol diacrylate (Sigma Aldrich) (9.4%)
                     2,2,2-Trifluoroethyl acrylate (Sigma Aldrich) (5%)
                     Darocure 1173 (Ciba) (1%)
Composition C3:      PAO 100 (Exxon Mobil) (100%)
First emulsion:      C1 (80%) in C2 (20%)
Second emulsion:     first emulsion (8.32%) in C3 (91.68%)
Shear rate:          6 248 s$^{-1}$
UV exposure:         3 minutes

Dispersion 2 contained monodisperse solid capsules encapsulating borates, having a shell thickness of 0.30 μm (as measured by Transmission Electron Microscopy).

Dispersion 3

Composition C1:      OLOA 9750 - borate additive (Oronite) (100%)
Composition C2:      CN 991 (Sartomer, Arkema) (89%)
                     HDDA - hexanediol diacrylate (Sigma Aldrich) (10%)
                     Darocure 1173 (Ciba) (1%)
Composition C3:      PAO 100 (Exxon Mobil) (100%)
First emulsion:      C1 (33.33%) in C2 (66.67%)
Second emulsion:     first emulsion (20%) in C3 (80%)
Shear rate:          2 083 s$^{-1}$
UV exposure:         3 minutes

Dispersion 3 contained solid capsules having a diameter of 2.3 μm, a core diameter of 1.0 μm, a shell thickness of 0.65 μm, and a borate content of 6.67% by weight.

Dispersion 4

Composition C1:      OLOA 9750 - borate additive (Oronite) (100%)
Composition C2:      CN 991 (Sartomer, Arkema) (89%)
                     HDDA - hexanediol diacrylate (Sigma Aldrich) (10%)
                     Darocure 1173 (Ciba) (1%)
Composition C3:      PAO 100 (Exxon Mobil) (100%)
First emulsion:      C1 (50%) in C2 (50%)
Second emulsion:     first emulsion (13.32%) in C3 (86.68%)
Shear rate:          2 083 s$^{-1}$
UV exposure:         3 minutes

Dispersion 4 contained solid capsules having a diameter of 2.0 μm, a core diameter of 1.0 μm, a shell thickness of 0.5 μm, and a borate content of 6.67% by weight.

Dispersion 5

Composition C1:      OLOA 9750 - borate additive (Oronite) (100%)

(continued)

| Composition C2: | CN 991 (Sartomer, Arkema) (84.6%) |
| | HDDA - hexanediol diacrylate (Sigma Aldrich) (9.4%) |
| | 2,2,2-Trifluoroethyl acrylate (Sigma Aldrich) (5%) |
| | Darocure 1173 (Ciba) (1%) |
| Composition C3: | PAO 100 (Exxon Mobil) (100%) |
| First emulsion: | C1 (33.33%) in C2 (66.67%) |
| Second emulsion: | first emulsion (20%) in C3 (80%) |
| Shear rate: | 6 248 s$^{-1}$ |
| UV exposure: | 3 minutes |

Dispersion 5 contained solid capsules having a diameter of 2.3 $\mu$m, a core diameter of 1.0 $\mu$m, a shell thickness of 0.50 $\mu$m, and a borate content of 6.67% by weight.

Dispersion 6

| Composition C1: | OLOA 9750 - borate additive (Oronite) (100%) |
| Composition C2: | CN 991 (Sartomer, Arkema) (80.1 %) |
| | HDDA - hexanediol diacrylate (Sigma Aldrich) (8.9%) |
| | 2,2,2-Trifluoroethyl acrylate (Sigma Aldrich) (10%) |
| | Darocure 1173 (Ciba) (1%) |
| Composition C3: | PAO 100 (Exxon Mobil) (100%) |
| First emulsion: | C1 (33.33%) in C2 (66.67%) |
| Second emulsion: | first emulsion (20%) in C3 (80%) |
| Shear rate: | 6 248 s$^{-1}$ |
| UV exposure: | 3 minutes |

Dispersion 6 contained solid capsules having a diameter of 2.3 $\mu$m, a core diameter of 1.0 $\mu$m, a shell thickness of 0.50 $\mu$m, and a borate content of 6.67% by weight.

*Encapsulation of fatty amines*

Dispersion 7

| Composition C1: | Comperlan LD -fatty amines (BASF) (100%) |
| Composition C2: | CN 991 (Sartomer, Arkema) (94%) |
| | HDDA - hexanediol diacrylate (Sigma Aldrich) (5%) |
| | Darocure 1173 (Ciba) (1%) |
| Composition C3: | PAO 100 (Exxon Mobil) (100%) |
| First emulsion: | C1 (20%) in C2 (80%) |
| Second emulsion: | first emulsion (25%) in C3 (75%) |
| Shear rate: | 9 373 s$^{-1}$ |
| UV exposure: | 10 minutes |

**Example 2 - Resistance to hydrolysis**

In presence of water, borates nanoparticles have the tendency to hydrolyze and to form crystals.
In order to demonstrate the resistance to hydrolysis of the encapsulated borates, water (1% by weight) was added to **Dispersion 1** and **Dispersion 2.**

A control sample was also prepared by adding water (1% by weight) to a dispersion comprising 4% of non-encapsulated borates (corresponding to OLOA9750 (Oronite)) into PAO 100 (Exxon Mobil).

The mixtures were let to rest for 10 days. The bottom of the decanted dispersions were washed with heptane and filtered on a 0.22 $\mu$m filter. Said filter was then put on a MEB+EDX system to detect the presence of potassium borate crystals.

On the filter corresponding to **Dispersion 1,** a large population of solid capsules was observed together with only few crystals of potassium borate.

On the filter corresponding to **Dispersion 2,** solid capsules were also observed. Only traces of potassium borate crystals were observed.

On the filter corresponding to the control sample, a high content of potassium borate crystals was observed.

## Example 3 - Extreme pressure properties

**Dispersions 3, 4, 5 and 6** were tested for their extreme pressure properties on a four-ball wear test machine according to D55136 Standard.

The dispersions were diluted to reach 4% OLOA 9750 and Zn DTP, calcium sulfonate and sulfurized olefin were added with the following amounts (the percentage are weight percentages based on the total weight of the composition):

- PAO 100 (Exxon Mobil): 54.58%,
- base oil of group III (SK): 36.40%,
- ZnDTP (Lubrizol): 0.26%,
- Calcium sulfonate (Chevron Oronite): 1.72%, and
- sulfurized olefin (Arkema): 3.04%.

|  | Last Load before Seizure (kg) | Wear Scar diameter (mm) |
|---|---|---|
| Control (free borates) | 120 | 0.53 |
| **Dispersion 3** | 130 | 0.53 |
| **Dispersion 4** | 130 | 0.52 |
| **Dispersion 5** | 140 | 0.57 |
| **Dispersion 6** | 120 | 0.54 |

|  | First Load of systematic seizure (kg) | Wear Scar diameter (mm) |
|---|---|---|
| Control (free borates) | 160 | 1.04 |
| **Dispersion 3** | 150 | 0.6 |
| **Dispersion 4** | 140 | 0.74 |
| **Dispersion 5** | 160 | 0.78 |
| **Dispersion 6** | 160 | 0.73 |

Dispersions 3 and 4, comprising solid capsules encapsulating borates without fluorinated treatment, showed good results which are equivalent to those obtained with a dispersion of free borates (control).

Dispersions 5 and 6, comprising solid capsules encapsulating borates with fluorinated treatment, showed good results which are equivalent to those obtained with a dispersion of free borates (control).

The dispersions obtained according to the method of the invention thus provided good extreme pressure properties, with or without fluorinated treatment.

## Example 4 - Thermogravimetric Analysis

Dispersion 7 was studied by TGA to evaluate the benefits of the encapsulation.

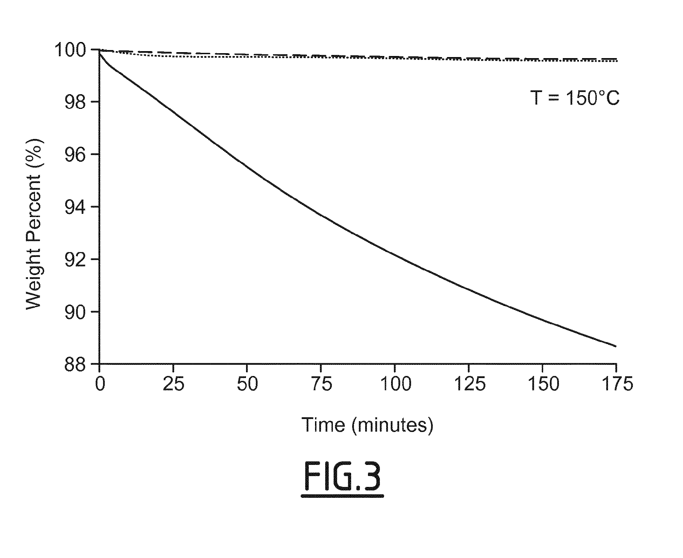

The results are given in Figure 3, which represents the weight loss (%) according to time, at a temperature of 150°C.

The "---" plotline corresponds to empty caspules (control n°1), the "..." plotline corresponds to the capsules of Dispersion 7 (encapsulated Comperlan LD), and the continuous plotline corresponds to a composition comprising free Comperlan LD (control n°2).

These results showed that encapsulation of Comperlan LD reduces the rate of weight loss compared to the free form, and thus showed that Comperlan D degraded at a reduced rate when encapsulated according to the invention and the capsule shell provided a barrier preventing or reducing the rate of evaporation until shell degradation.

**Example 5 - Comparison of different methods - Characterization of the monodispersity**

Solid microcapsules were prepared using the following compositions C1, C2, and C3:

- Composition C1: ExxonMobil PA040 (Polyalpha olefin with a viscosity of 892 mPa.s at 25°C)
- Composition C2:

  ○ 89% CN981 (Sartomer, Arkema)
  ○ 10% Hexanediol diacrylate
  ○ 1 % Darocure 1173 (photo-initiator)

- Composition C3: ExxonMobil PAO100 (Polyalpha olefin with a viscosity of 2989 mPa.s at 25°C)

An overhead stirrer (Heidolph RZR 2021) equipped with a three-bladed propeller was used to fabricate the emulsions. Mixing speed was set to 1 000 rpm. All steps were performed at 25°C.

Step a): Composition C1 was added dropwise under constant mixing to composition C2 until a ratio C1:C2 = 1:4 was reached. After this step an emulsion C1-in-C2 was formed. Step b): The C1-in-C2 emulsion obtained after step a) was added dropwise under constant mixing to composition C3 until a ratio C1-in-C2:C3 = 1:4 was reached. After this step a double emulsion C1-in-C2-in-C3 was formed.
Mixing step: The double emulsion C1-in-C2-in-C3 was then sheared with different kinds of mixer:

- an overhead stirrer (Heidolph RZR 2021) equipped with a three-bladed propeller with a mixing speed of 1 000 rpm,
- an Ika T25 Ultra-Turrax mixer for 5 minutes at 24 000 rpm, or
- a Couette-geometry mixer, with a flowrate of 8 mL/min and rotation speed of 450 rpm, corresponding to a shear rate of 9373 s$^{-1}$ (homogeneous high-shear mixing, corresponding to the conditions of step c) of the method of the invention).

Step d): The emulsions were then submitted to UV irradiation to polymerize the microcapsules for 6 minutes using a Dymax Light Box ECE 2000 having an output light intensity of 0.1 W/cm$^2$ at 365 nm. The series of solid microcapsules thus obtained were subsequently imaged with an Olympus IX71 microscope equipped with a UPlanSApo 100x/1.4 objective and with a JEOL JEM 2010F transmission electron microscope. The resulting images were treated with Image J software to extract the distribution of microcapsule diameters.

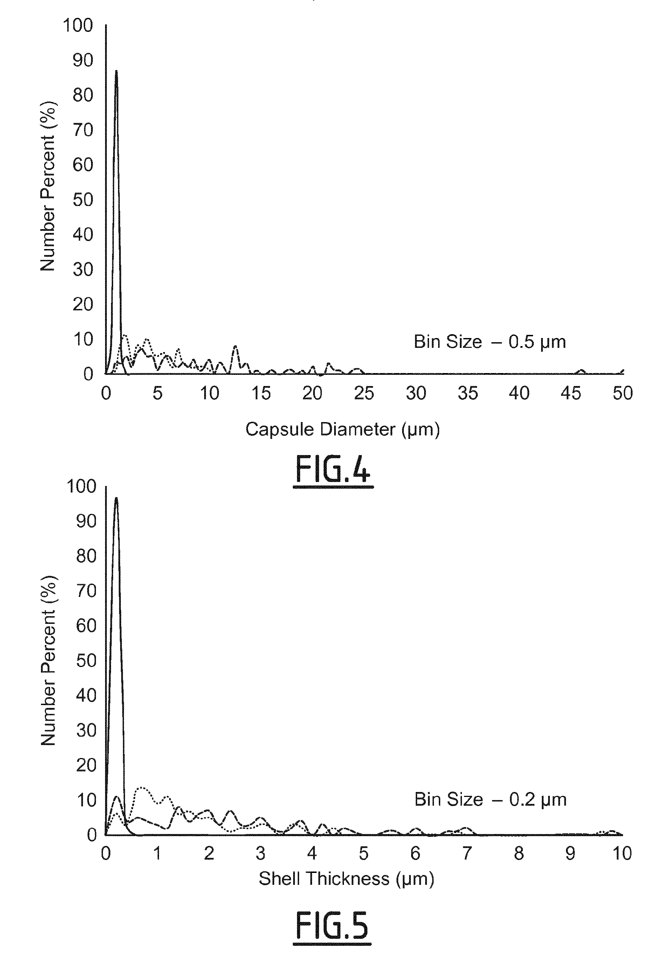

The distribution of the series of microcapsules are represented in Figure 4 (microcapsule diameter distribution) and Figure 5 (shell thickness distribution), wherein the "---" plotline corresponds to the overhead stirrer, the "..." plotline corresponds to the Ultra-Turrax mixer, and the continuous plotline corresponds to the Couette-geometry mixer.

The series of solid microcapsules resulting from a mixing step carried out in an overhead stirrer (standard emulsification) has an average diameter is 9.05 $\mu$m and the standard deviation of the distribution is 8.16 $\mu$m or 90%. The average shell thickness is 2.32 $\mu$m and the standard deviation of the distribution is 2.01 $\mu$m or 87%.

This result illustrates the fact that standard mixers such yield solid microcapsules having very broad size distributions.

The series of solid microcapsules resulting from a mixing step carried out in Ika T25 Ultra-Turrax mixer, which provides heterogeneous high-shear mixing, has an average diameter of 5.18 $\mu$m and a standard deviation of 4.35 $\mu$m or 84%. The average shell thickness is 1.50 $\mu$m and the standard deviation of the distribution is 1.38 $\mu$m or 92%.

This result illustrates the fact that mixers such as the Ika T25 Ultra-Turrax allow decreasing the average size of the microcapsules, because of the high shear applied to the double emulsion, but still yield very broad size distributions.

By contrast, the series of solid microcapsules obtained according to the method of the invention, which results from a mixing step carried out in a Couette-geometry mixer, has an average diameter of 0.13 $\mu$m and a standard deviation of 0.03 $\mu$m or 23%.

This result demonstrates the relevance of the Couette-geometry mixer to obtain both small sizes of microcapsules and narrow distributions.

**Claims**

1. Method for preparing solid microcapsules (20), comprising the steps of:

   a) adding under agitation a composition C1 comprising at least one active material to a cross-linkable liquid composition C2,
   wherein the active material is an additive to be used in the oil industry, composition C1 and composition C2 being immiscible with each other,
   so that a first emulsion is obtained, said first emulsion comprising droplets (1) of composition C1 dispersed in composition C2,
   b) adding under agitation the first emulsion obtained in step a) to a liquid composition C3,
   composition C3 and composition C2 being immiscible with each other,
   so that a second emulsion is obtained, said second emulsion comprising droplets (5) dispersed in composition C3,
   c) loading the second emulsion obtained in step b) in a mixer which applies a homogeneous controlled shear rate to said second emulsion, said shear rate being from 1 000 $s^{-1}$ to 100 000 $s^{-1}$,
   so that a third emulsion is obtained, said third emulsion comprising droplets (10) dispersed in composition C3, and
   d) cross-linking the droplets (10) obtained in step c),

   so that solid microcapsules (20) dispersed in composition C3 are obtained.

2. Method according to claim 1, wherein the active material is solubilized into composition C1.

3. Method according to claim 1, wherein the active material is dispersed in the form of solid particles into composition C1.

4. Method according to any one of claims 1 to 3, wherein the active material is an additive to be included in lubricants, lubricating base oils, fuels, bitumens, or in the drilling fluids, sludges or muds, or an additive to be used in oil exploration/production.

5. Method according to any one of claims 1 to 4, wherein composition C2 comprises at least one monomer or polymer, at least one cross-linker and at least one initiator of polymerization.

6. Method according to any one of claims 1 to 5, wherein the viscosity of composition C2 at 25°C is from 500 mPa.s to 100 000 mPa.s.

7. Method according to any one of claims 1 to 6, wherein the viscosity of composition C2 is higher than the viscosity of composition C1.

8. Method according to any one of claims 1 to 7, wherein during step a), the volume of composition C1 to the volume of composition C2 ratio is from 1:10 to 10:1.

9. Method according to any one of claims 1 to 8, wherein the viscosity of composition C3 at 25°C is higher than the viscosity at 25°C of the first emulsion obtained in step a).

10. Method according to any one of claims 1 to 9, wherein during step b), the volume of the first emulsion to the volume of composition C3 ratio is from 1:10 to 10:1.

11. Method according to any one of claims 1 to 10, wherein the mixer used in step c) is a Couette-geometry mixer, comprising two concentric cylinders, an outer cylinder of inner radius $R_o$ and an inner cylinder of outer radius $R_i$, the outer cylinder being fixed and the inner cylinder being rotating with an angular velocity w.

12. Method according to claim 11, wherein the angular velocity w of the rotating inner cylinder is over than or equals to 30 rad.$s^{-1}$.

13. Method according to any one of claim 11 or 12, wherein the gap $d = R_o - R_i$ between the two concentric cylinders

is from 50 μm to 1 000 μm.

14. Method according to any one of claims 1 to 13, wherein during step d), the cross-linking is carried out by submitting the double droplets (10) obtained in step c) to a source of light, preferably a source of UV light, able to initiate the cross-linking of composition C2.

15. Series of solid microcapsules (20), said microcapsules (20) being obtainable by the method according any one of claims 1 to 14, each microcapsule (20) comprising :

  - a core comprising a composition comprising at least one active material as defined in claim 1, and
  - a solid cross-linked shell surrounding said core,

wherein the standard deviation of microcapsule diameter distribution is below 25% or below 1 μm.

16. Series of solid microcapsules (20) according to claim 15, wherein the average diameter of the solid microcapsules (20) is less than or equal to 10 μm.

17. Series of solid microcapsules (20) according to any one of claim 15 or 16, wherein each solid microcapsule (20) is surfactant-free.

18. Series of solid microcapsules (20) according to any one of claims 15 to 17, wherein each solid microcapsule (20) is water-free.

19. Composition comprising a series of solid microcapsules (20) according to any one of claims 15 to 18, and a lubricating base oil.

20. Method for releasing an active material, comprising a step of applying a mechanical shear stress to a composition comprising a series of solid microcapsules (20) according to any one of claims 15 to 18.

<u>FIG.1</u>

FIG.2

T = 150°C

Weight Percent (%)

Time (minutes)

FIG.3

FIG.4

FIG.5

Europäisches
Patentamt

European
Patent Office

Office européen
des brevets

**EUROPEAN SEARCH REPORT**

Application Number

EP 15 30 6429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/106809 A1 (BP EXPLORATION OPERATING [GB]; COLLINS IAN RALPH [GB]; DUNCUM SIMON NE) 24 December 2003 (2003-12-24) * claims 1, 4-5, 12 * * page 9, line 7 - line 12 * | 1-20 | INV. B01J13/14 |
| A | FR 2 867 075 A1 (ETHYPHARM SA [FR]) 9 September 2005 (2005-09-09) * the whole document * | 1-20 | |
| A | FR 2 860 717 A1 (ETHYPHARM SA [FR]) 15 April 2005 (2005-04-15) * the whole document * | 1-20 | |
| A | EP 2 823 803 A1 (ORÉAL L [FR]) 14 January 2015 (2015-01-14) * paragraph [0006] * | 20 | |
| A | EP 1 033 118 A1 (3M INNOVATIVE PROPERTIES CO [US]) 6 September 2000 (2000-09-06) * paragraph [0009] * | 20 | TECHNICAL FIELDS SEARCHED (IPC) |
| A | FR 2 767 597 A1 (EDITIONS BENOIT FRANCE [FR]) 26 February 1999 (1999-02-26) * page 2, line 20 - line 24 * | 20 | B01J |

The present search report has been drawn up for all claims

| Place of search | Date of completion of the search | Examiner |
|---|---|---|
| The Hague | 26 February 2016 | Tarallo, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6429

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2016

| Patent document cited in search report | | Publication date | Patent family member(s) | | Publication date |
|---|---|---|---|---|---|
| WO 03106809 | A1 | 24-12-2003 | AU | 2003232330 A1 | 31-12-2003 |
| | | | CA | 2488810 A1 | 24-12-2003 |
| | | | CN | 1659358 A | 24-08-2005 |
| | | | EP | 1511916 A1 | 09-03-2005 |
| | | | US | 2006166838 A1 | 27-07-2006 |
| | | | WO | 03106809 A1 | 24-12-2003 |
| FR 2867075 | A1 | 09-09-2005 | AU | 2005221361 A1 | 22-09-2005 |
| | | | BR | PI0507521 A | 03-07-2007 |
| | | | CA | 2557755 A1 | 22-09-2005 |
| | | | CN | 1953803 A | 25-04-2007 |
| | | | EP | 1720649 A1 | 15-11-2006 |
| | | | FR | 2867075 A1 | 09-09-2005 |
| | | | IL | 177593 A | 27-09-2011 |
| | | | JP | 2007526287 A | 13-09-2007 |
| | | | KR | 20060129437 A | 15-12-2006 |
| | | | US | 2008233201 A1 | 25-09-2008 |
| | | | WO | 2005087362 A1 | 22-09-2005 |
| FR 2860717 | A1 | 15-04-2005 | CA | 2541009 A1 | 12-05-2005 |
| | | | CN | 1867320 A | 22-11-2006 |
| | | | EP | 1673067 A1 | 28-06-2006 |
| | | | FR | 2860717 A1 | 15-04-2005 |
| | | | JP | 2007508357 A | 05-04-2007 |
| | | | US | 2007053988 A1 | 08-03-2007 |
| | | | WO | 2005041930 A1 | 12-05-2005 |
| EP 2823803 | A1 | 14-01-2015 | EP | 2823803 A1 | 14-01-2015 |
| | | | WO | 2015004631 A1 | 15-01-2015 |
| EP 1033118 | A1 | 06-09-2000 | DE | 60021297 D1 | 25-08-2005 |
| | | | DE | 60021297 T2 | 24-05-2006 |
| | | | EP | 1033118 A1 | 06-09-2000 |
| FR 2767597 | A1 | 26-02-1999 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1298191 A
- EP 0861182 A
- EP 0663000 A
- EP 0736590 A
- EP 0938535 A
- US 20120010112 A
- WO 2012004300 A
- EP 0680506 A
- EP 0860494 A
- WO 199804656 A
- EP 0915944 A
- FR 2772783
- FR 2772784
- EP 0071513 A
- EP 0100248 A
- FR 2528051
- FR 2528423
- EP 112195 A
- EP 0172758 A
- EP 0271385 A

- EP 0291367 A
- EP 0261959 A
- EP 0593331 A
- EP 0674689 A
- EP 0327423 A
- EP 0512889 A
- EP 0832172 A
- US 20050223631 A
- US 5998530 A
- WO 1993014178 A
- EP 0573490 A
- EP 01692196 A
- WO 2009106743 A
- WO 2009106744 A
- US 4758365 A
- US 4178951 A
- US 2816073 A
- WO 2011073893 A
- WO 2014102237 A
- US 5938581 A

**Non-patent literature cited in the description**

- **LIU et al.** *Polymer Chemistry,* 2013, vol. 4, 3431-3443